# EUROPEAN PATENT SPECIFICATION

(11) **EP 2 486 492 B1**
(45) Date of publication and mention of the grant of the patent: **09.05.2018**
(21) Application number: 10822499.9
(22) Date of filing: 05.10.2010
(51) Int. Cl.: H04L 12/24, H04L 12/26

(54) **SYSTEM FOR AND METHOD OF NETWORK ASSET IDENTIFICATION**
SYSTEM UND VERFAHREN ZUR IDENTIFIKATION VON NETZWERKANLAGEN
SYSTÈME ET PROCÉDÉ D'IDENTIFICATION DE COMPOSANTS DE RÉSEAU

(30) Priority: 07.10.2009 WO PCT/US2009/059801
(43) Date of publication of application: 15.08.2012
(73) Proprietor: Molex, LLC, Lisle, IL 60532 (US)
(72) Inventor: PANELLA, Augusto, P., Lisle IL 60532 1682 (US); BAINES, Elliot, A., Lisle IL 60532 1682 (US); LIN, Jeng-De, Lisle IL 60532 1682 (US)
(74) Representative: Mergel, Volker
(86) International application number: PCT/US2010/051381
(87) International publication number: WO 2011/044068

(56) References cited:
- EP-A- 1 376 341
- US-A1- 2004 107 276
- US-A1- 2004 107 276
- US-A1- 2005 094 661
- US-A1- 2005 240 666
- US-A1- 2005 240 666
- US-A1- 2006 047 800
- US-A1- 2006 047 800
- US-A1- 2006 253 557
- US-A1- 2006 253 557
- US-A1- 2007 022 185
- US-A1- 2008 046 553
- US-A1- 2009 100 174
- US-A1- 2009 100 174
- US-B1- 7 240 364
- US-B2- 7 209 963

## Description

### Field of the invention

The invention relates to a system of network asset identification of a network having a plurality of end-user devices connected thereto, and to a method of identifying a new end-user device connected within a network which is part of the system of network asset identification. Such systems are also termed infrastructure management systems, they include systems, assemblies and components that are useful in managing infrastructure assets.

### Background

US 2006/0047800 A1 relates to systems and methods for network management. The network interconnects a plurality of end-user devices and may include switches, cross-connect patch panels and powered-patch-panels as well as cables and patch cords. Intelligent network devices can communicate with the management system. There is a network topology and device information data base which is responsive to network management systems requests, and is to notify from intelligent network devices based on events local to the intelligent network device such as connectivity changes to the device. To effectively maintain the network, the network management system may update the network topology and device information data base periodically based on a schedule.

US 2004/0107276 A1 related to a network interface management system for granting a unique code corresponding to an object, interfaced with each piece of network equipment to interface information and for changing interface status information. Adding a new end-user device to the network interface management system is not disclosed.

US 2005/0240666 A1 relates to a scheduling method for polling device date. Different types of managed devices and various types of data are sorted to form different modules. There is no disclosure about whether a new end-user device has been connected to any of remote outlets of patch panel ports. Polling is accomplished systematically, rather than event driven.

US 2006/0253557 A1 relates to a system for decoupling devices in a network for use by a system-wired application.

US 2009/0100174 A1 relates to a system for automatic polling of multiple device types. A common poller polls multiple network devices of a communication network regardless device type.
Computing networks that exist within large organizations consist of two types of devices that must be interconnected to form a usable data network. These assets are generally classified as end-user devices and networking devices. Examples of end-user devices include personal computers (PC), voice-over-internet protocol (VoIP) phones, and network printers. A typical Local Area Network (LAN) for a large-scale enterprise may include thousands of end-user devices deployed throughout a campus in individual offices or in common areas accessible to the end-users. In addition, data networks also typically include network devices such as switches and routers that form the core of the network. These networking devices serve to route data packets between devices on the LAN, or between the LAN and a larger corporate Wide Area Network (WAN), or to the internet. These network devices are typically located in a centralized room or rooms, known as wiring closets and data centers. Information technology (IT) departments for such organizations need to know the status of network connectivity of each device, the physical location of the devices, and need to identify the source and location of any errors or problems as quickly as possible. Tracking of device assets is a key concern, for example, in monitoring the presence of devices on the network for loss-prevention purposes, and to ensure devices are properly physically positioned in offices or on floors where end users can best utilize them, while maintaining proper connectivity of the network. Currently, a unified system for tracking devices connected to the network and monitoring the status of the physical connectivity of the network does not exist.

The Open System Infrastructure (OSI) model describes layered communications in a computer network. "Layer 1," the physical layer, defines all of the electrical and physical specifications for devices connecting to a network. For example, the Institute of Electrical and Electronics Engineers (IEEE) Standard 802.3 defines the standards for wired Ethernet, which is commonly used in computing networks. As part of the IEEE 802.3 Specification, the physical layer of an Ethernet network is defined. Examples of physical layer elements as defined in IEEE 802.3 include electrical voltages and signal protocols, cable requirements, and termination resistance.

To connect the end-user devices to the network devices requires that the network devices in the wiring closet or data center be connected to end-user devices as needed for the particular requirements of the users of the LAN. Each path from switch to end-user device is known as a channel. The typical deployment of physical layer connectivity for a LAN channel consists of a patch cord between a switch port and a patch panel port; a length of multi-pair cable from the rear of the patch panel port to a work area outlet port at the end-user's office, and a patch cord from the outlet to the end-user's device. Each of these ports are modular jacks designed to industry-standard specifications so as to accept mating patch plugs.

The management of the patch cords in the telecom room or at the work area outlet can present issues to the IT management group. Each time an employee is hired, leaves the organization or changes location, it is inevitable that patch cables must be connected and disconnected. A wiring closet typically contains numerous switches, patch panels and patch cords, numbering at times in the hundreds and higher. The patch cords are often snaked around one another, making the operations of adding, removing, or tracing the patch cords difficult and time-consuming. When a new patch cable has to be connected within the system, or a patch cable has to be moved, a technician enters the wiring closet and must locate the appropriate cable among hundreds, or perhaps thousands, of patch cords. The technician then must locate the appropriate patch panel and the appropriate ports on those patch panels. Finally, the technician must connect the patch cord to the correct ports on the patch panels and verify that the connection has been done correctly. Once the patch cord is connected, there is not an easy, cost and time-effective way to determine if the cord was connected to the correct ports. For example, the technician may have to go to the network port or end-user device located at a remote location, such as an individual's office, to determine if the patch cable was correctly inserted and that network connectivity is available at the asset. Therefore, connecting and transferring networks assets is labor-intensive.

Additionally, the IT department does not have an efficient way to determine the exact location of network problems which may be attributed to the physical layer. For example, the problem may be located in the switch closet if a patch cord was not properly connected, or the problem may exist in the wiring from the switch closet to the end-user device. The IT department does not currently have an efficient way to determine if network problems exist in the physical network wiring. Accordingly, a need exists for a better information management system that includes components that simplify the process for identifying assets in order, at a minimum, to reduce the time required to move and check assets on a network.

An additional area of concern is that the LAN may have substantial numbers of unused or spare permanent links. A spare permanent link refers to a cable connection from patch panel to a work area outlet, but without a network device and/or end-user device connected via patch cords. Such links are typically maintained in LAN deployments to ensure appropriate capacity in case of employee moves, adds or changes, or to ensure extra capacity for disaster-recovery scenarios. An issue facing IT managers today is that it is difficult and time consuming to re-test spare permanent links to verify connectivity prior to their being put into use. Consequently most spare permanent links are not tested on a regular basis, and if there is a problem with the connectivity of the link, the issue may not be discovered until the permanent link is activated as part of a working channel. This can cause delay and added expense as the problem is tracked down and repaired.

U.S. Patent No. 6,590,374, issued July 8, 2003 to Har-Lev describes a terminator unit for use in wiring networks for naming outlets and for verifying the normality of the wiring. The terminator includes a connector with a plurality of contacts and a set of resistors. The resistors of the first set are connected between a common point and a selected contact, such that a particular binary code is determined according to the particular combination of resistors connected to the contacts.

Periodic probing or polling of all ports on the network is performed in order to list, or catalog, all of the connected assets or components in order to develop an inventory of assets. Assembling this inventory requires "pinging" every port on the network and gathering data from the connected assets. This network intensive process is typically performed not more than once per month in order to limit disruption to the network. Accordingly, a system that is capable of providing up-to-date information whenever an end-user device is connected to the network without more frequent system-wide polling is desirable.

### SUMMARY OF THE INVENTION

Accordingly, it is a general object to provide an improved system for monitoring a network having multiple outlets to which are connected various system assets.

Another object it to provide a method of identifying a new end-user device connected within a network including monitoring a plurality of remote outlets and detecting a new end-user device upon connection thereof to the network at a first remote outlet. Information associated with the new end-user device may be determined by electronically communicating through some but not all of the remote outlets.

If desired, each remote outlet may be operatively associated with one of a plurality of patch panels ports within the network and the method may include electronically communicating through only a patch panel port interconnected to the first remote outlet to which the new end-user device may be connected. Each remote outlet may be operatively associated with one of a plurality of patch panels ports within the network and the method may include electronically communicating through some but not all of the patch panel ports. The first remote outlet may be interconnected to a first patch panel having patch panel ports and the method may include electronically communicating through only patch panel ports of the first patch panel. The first remote outlet may be operatively associated with a switch, and the method may include electronically communicating through only remote outlets operatively associated with the switch.

If desired, the method may include directing a polling activity through some but not all of the network outlets. The method may include determining a unique identifier of the new end-user device. The method may include determining a MAC address of the new end-user device. The method may include determining at least one of the following with respect to the new end-user device: MAC address, IP address, computer name, amount of toner available, amount of drive space available, and information regarding operating system used by the end-user device.

A computing device may electronically communicate with a switch, and the switch may request data operatively associated with the new end-user device. The data associated with the new end-user device may be a unique identifier and the method may further include matching the unique identifier with a network map to identify a specific physical location and identity of the new end-user device. The method may include providing the specific physical location and identity of the new end-user device to a network management system. The method may include electronic monitoring between a scanner and the patch panel to which the first remote outlet is operatively associated. The method may include electronic detecting between a scanner and a patch panel to which the first remote outlet is operatively associated. The method may include electronic detecting as a change in electrical signature between a scanner and a patch panel to which the first remote outlet operatively associated.

The method may include electronically communicating to a computing device the presence of the new end-user device as well as the specific port associated with a switch to which the new end-user device is operatively connected. The method may include identifying physical locations of each port and remote outlet of the network and storing the physical locations in the computing device together with electronically mapping each port and remote outlet and matching each physical location to an electronic map created by the electronic mapping.

A system for use with a network having a plurality of end-user devices connected thereto may also be provided that includes a plurality of patch panels, each having a plurality of patch panel ports. A remote outlet is are operatively associated with each patch panel port and each remote outlet is configured for interconnection to a network device. Sensing circuitry electronically determines whether a new end-user device has been connected to any of the remote outlets and a computing device is configured to perform event driven polling by communicating through some but not all of the remote outlets to determine data associated with the new end-user device in response to the new end-user device being connected to one of the remote outlets.

If desired, a scanner may be provided that communicates with each of the patch panels to monitor the addition of a new end-user device connected to one of the remote outlets. The scanner and each of the patch panels may include a portion of the sensing circuitry. The computing system may include a switch and each remote outlet may be operatively associated with the switch through a patch panel port. The switch may be configured to perform event driven polling only through a patch panel port operatively associated with the remote outlet to which the new end-user device is connected. The computing system may include a switch and each remote outlet may be operatively associated with the switch through a patch panel port. The switch may be configured to perform event driven polling only through patch panel ports of a patch panel operatively associated with the remote outlet to which the new end-user device is connected.

If desired, the computing system may include a plurality of switches and each remote outlet may be operatively associated with one of the switches through a patch panel port. The computing device may be configured to perform event driven polling only through patch panel ports operatively associated with the switch to which the new end-user device is connected. The system may include a switch and a plurality of cross-connect panels. Each cross-connect panel may have a plurality of cross-connect ports and each remote outlet may be operatively associated with the switch through a patch panel port and a cross-connect port. A plurality of cables may be provided with each cable extending from one of the patch panel ports to one of the remote outlets in order to facilitate connection of the network devices to the network. The computing device may store data incorporating the physical locations of each port and remote outlet as well as an electronic map of each port and remote outlet. The system may include monitoring circuitry embedded within the patch panel and operatively associated with each port to monitor a change in electrical signature of a network channel.

These and other objects, features and advantages of the present invention will be clearly understood through a consideration of the following detailed description.

### BRIEF DESCRIPTION OF THE DRAWINGS

In the course of this detailed description, reference will be frequently made to the attached drawings in which:
FIG. 1 is a system diagram that illustrates one embodiment of a computing network including switches, patch panels, a scanner and work stations in which the system of the present invention is used;
FIG. 2 is a system diagram showing greater detail of a portion of Fig. 1;
FIG. 3 is a flow diagram illustrating an exemplary use of the present invention; and
FIG. 4 is a front elevational view of a patch panel utilized with the present invention.

### DETAILED DESCRIPTION OF THE PREFERRED EMBODIMENTS

The following description is intended to convey the operation of exemplary embodiments of the invention to those skilled in the art. It will be appreciated that this description is intended to aid the reader, not to limit the invention. As such, references to a feature or aspect of the invention are intended to describe a feature or aspect of an embodiment of the invention, not to imply that every embodiment of the invention must have the described characteristic.

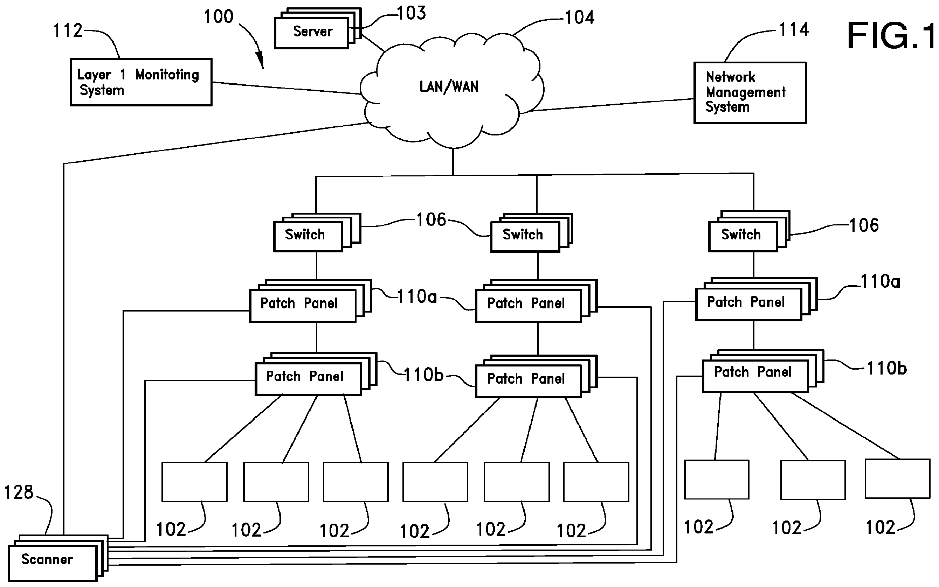

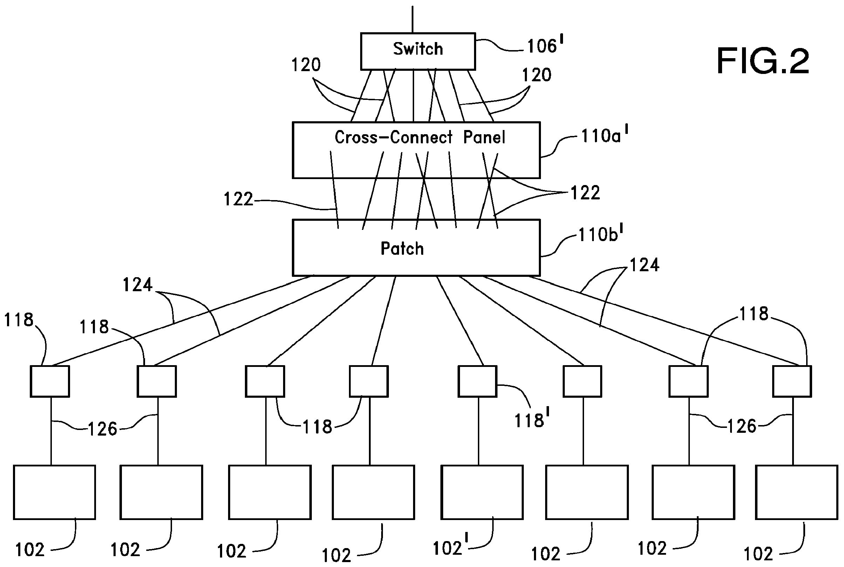

Turning to the drawings and referring first to Figs. 1 and 2, an exemplary network 100 is illustrated. The exemplary network may be a corporate computing network with multiple users and end-user devices 102. As used herein, the term "end-user devices" refers to physical devices or assets operated by users of the network and may include, without limitation, personal computers, telephones, printers, facsimile machines, monitors and other electronic devices. The exemplary network includes a plurality of servers 103 for running various applications on or through LAN/WAN 104. The network utilizes a plurality of switches 106 for routing and monitoring information to and from the various end-user devices 102. Each end-user device 102 is connected to switch 106 via a series of patch panels 110 and cables. Layer 1 monitoring system 112 operates on a computing device such as either a remote or centralized server. The network may further include a network management system 114 operating on a computing device such as a centralized server. If desired, the Layer 1 monitoring system 112 and the network management system 114 could operate on the same computing device and it is desirable for both systems to be able to communicate directly with each other.

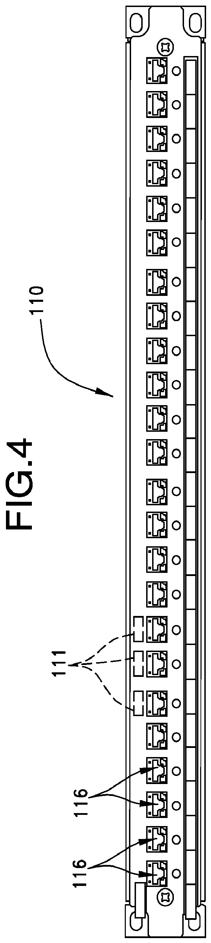

Referring to Fig. 4, a patch panel 110 is illustrated with twenty four ports 116. The patch panel 110 is typically mounted in a rack (not shown) with other patch panels and arranged in an array within a dedicated room, commonly referred to as a wiring closet. The patch panels 110 are wired to network jacks or remote outlets 118 (Fig. 2) (e.g., wall jacks in individual offices or cubicles throughout a building), which are often a significant distance from the wiring closet. The patch panel 110a closest to switch 108 is typically referred to as a "cross-connect" panel with switch cables 120 extending from the front of switch 108 and into the rear of patch or cross-connect panel 110a. Electronic circuitry and components 111 are provided within each patch panel and associated with each port 116 to permit electronic monitoring of each port as described below.

Patch cables 122 extend between a port on the front of patch panel 110a (Fig. 2) and a port on the front of patch panel 110b to interconnect such ports. The pairs of interconnected ports on the patch panels 110a, 110b may or may not be vertically aligned, as schematically depicted in Fig. 2. A remote outlet or horizontal cable 124 extends from the rear of each patch panel 110b and to each individual remote outlet 118. Finally, device cable 126 is utilized to connect each end-user device 102 to remote outlet 118.

According to common industry usage, the ports at the rear of switches 106 and the front of patch panels 110, the remote outlets 118 and the outlets or ports (not shown) on end-user devices 102 are typically in the form of RJ-45 jacks so that cables having RJ-45 plugs at the ends thereof may be interconnected thereto. The rear of patch panels 110 and the rear of remote outlets 118 typically utilize insulation displacement terminals (not shown) so that cables are interconnected thereto by terminating insulation covered wires thereat. If desired, other combinations of connections or even other structures altogether could be utilized for interconnecting the various components of network 100.

Referring to Fig. 1, network 100 further includes scanners 128 that operate together with the Layer 1 monitoring system 112 and electronic circuitry and components 111 of patch panel 110 to monitor connection changes at switches 106, patch panels 110 and remote outlets 118 connected to the network 100. The scanners are connected to patch panels 110 and, in one embodiment, utilize a serial data connection for communication. The scanners are further connected to the Layer 1 monitoring system and its associated computing device through LAN/WAN 104. Placing resistors in the remote outlets 118 allows the system to discriminate between open remote outlets and those having end-user devices connected thereto with the end-user devices turned off.

Referring to Fig. 1, it should be noted that such drawing is schematic in nature and the network and components thereof are extremely scalable and thus may include almost any number of components. In addition, while one scanner 128 is depicted as being connected to six patch panels 110, in one embodiment, multiple scanners 128 may be used with each connected to up to twenty-four patch panels. While each patch panel 110b is depicted as being connected to three end-user devices 102, in one embodiment, multiple patch panels 110b may be connected to up to twenty-four end-user devices.

Upon initially setting up network 100 and the Layer 1 monitoring system 112, a building map of the physical location of each port 116 and remote outlet 118 is created. This map is then saved in an electronic format within the Layer 1 monitoring system 112 with appropriate links between each switch 106, patch panel 110, port 116 and remote outlet 118. Each switch 108 polls each remote outlet 118 and provides data received back from each connected end-user device to the Layer 1 monitoring system 112 which incorporates the data from the switches into the physical location data in order to create a database including physical and electronic locations of the various end-user devices.

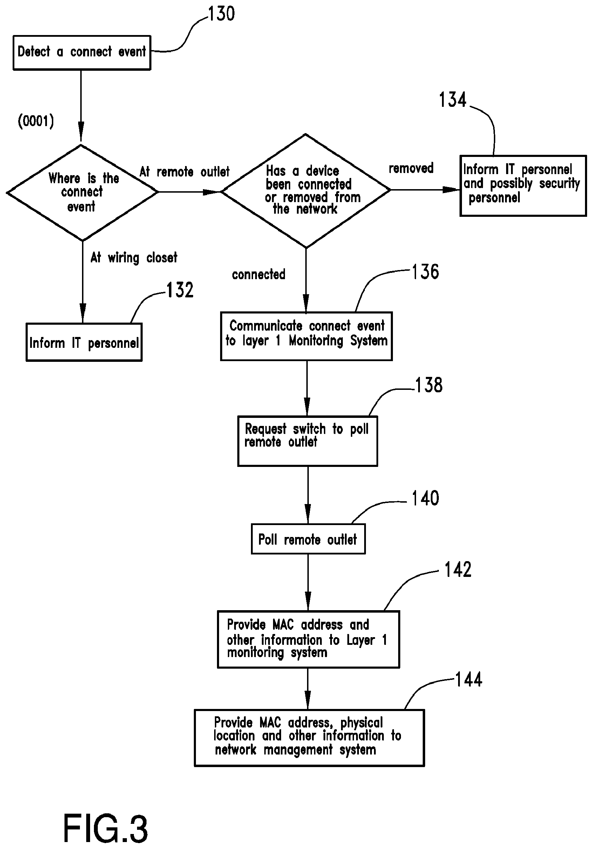

Referring to Fig. 3, during operation, when the scanner determines (at step 130) that a patch cord 122 from a port 116 of cross-connect panel 110a or patch panel 110b has been connected or disconnected or an asset cable 126 has been connected or disconnected from remote outlet 118, the scanner 128 informs the Layer 1 monitoring system 112 of such a change or "connect event." If the connect event occurs at a port 116 of cross-connect panel 110a or patch panel 110b, the system 112 will inform (at step 132) IT personnel of the change and the personnel may act accordingly. For example, connect events that occur at a port 116 of a cross-connect panel 110a or patch panel 110b are typically in connection with IT personnel operating within the wiring closet. In such case, those connect events may be ignored. If, however, the connect event occurs when no one is scheduled or authorized to be operating within the specified wiring closet, personnel may be sent to investigate whether there has been an unauthorized access, a malfunction or merely miscommunication within the IT group.

If an existing end-user device 102 is disconnected from a remote outlet 118, the scanner 128 communicates to the Layer 1 monitoring system 112 the specific port 116 of patch panel 110b interconnected or associated with the remote outlet from which the device has been disconnected. Since the location of each component of the network is stored within the Layer 1 monitoring system 112, the physical location of the remote outlet 118 from which the end-user device 102 was disconnected is determined as well as the identification of the specific device. This information is immediately provided (at step 134) to the network management system so that IT personnel are quickly able to determine what has been removed from the network and react accordingly. For example, if a network printer is unexpectedly disconnected from the network, a technician may be dispatched to the printer to fix the problem and security may be alerted in the event the printer is being stolen.

If a new end-user device 102' (Fig.2) is connected to the network, the system is able to determine the addition of such end-user device, its MAC address, its physical location as well as other desired information. By adding circuitry 111 to patch panels 110 (and resistors to remote outlets 118, if desired) and utilizing scanner 128, the connection of end-user device 102 may be monitored. Upon the connection of a new end-user device 102' (or otherwise completing the electrical channel between an end-user device 102 and a switch 106 if, for example, the end user device is connected prior to completing the connection between the cross-connect panel 110a and switch 106), the scanner 128 detects the connect event and communicates at (step 136) to the Layer 1 monitoring system 112 the identification of the port connected to the remote outlet 118' to which the connection has been made. More specifically, scanner 128 compares the electrical signature (such as, for example, without limitation, the impedance or resistance) along the channel with a database of values. When the electrical signature matches a predetermined value within the database, the Layer 1 monitoring system determines that a fully connected channel exists between end-user device 102 and switch 106 and thus a new end-user device has been added to the network (or connectivity between an end-user device 102 and a switch 106 has been established).

The Layer 1 monitoring system 112 and server 103 electronically request (at step 138) the switch 106' (interconnected to remote outlet 118' via one of the cross-connect panels 110a' and one of the patch panels 110b') to poll or electronically request (at step 140) certain information or data of the newly attached end-user device 102'. The end-user device 102' responds back (at step 142) to the switch 106' and ultimately the Layer 1 monitoring system 112 with the desired data or information such as the MAC address, IP address, computer name, amount of drive space available (if applicable), amount of toner remaining (if applicable), information regarding the operating system used by the end-user device and any other desired data or information that the devices may be capable of providing.

The Layer 1 monitoring system 112 then updates the database including the physical and electronic locations of the new end-user device 102'. As a result, the IT personnel immediately have access to the physical location of the newly attached end-user device 102' together with its MAC address and other relevant information. Such "event driven" polling will typically be carried out using, for example, simple network management protocol ("SNMP"). The information regarding this new asset (namely, the MAC address and other relevant information) may immediately be communicated (at step 144) by the Layer 1 monitoring system and entered into the network management system 114 without waiting for a system-wide polling or discovery of the network. As a result, IT personnel are constantly provided with up-to-date system information, including detailed information regarding the end-user devices.

If desired, rather than only polling the specific outlet 118' to which the new end-user device 102' has been connected, it may be possible or desirable to poll the remote outlets connected to the switch 106' to which the new end-user device 102' has been connected or, in the alternative, all of the remote outlets 118 interconnected to patch panel 110b' connected to remote outlet 118' may be polled. This will permit polling of less than all of the remote outlets and thus reduce the network resources required to maintain the database of the network components.

By quickly detecting the connection of new end-user devices 102 to network 100 and utilizing event based polling, the Layer 1 monitoring system 112 reduces the need to probe or poll every IP address on a network looking for newly connected devices. As a result, it is possible to lengthen the time between regularly scheduled discovery or polling of the network and thus reduce network utilization and increase the accuracy of the records of the end-user devices.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as openended terms (i.e., meaning "including, but not limited to,") unless otherwise noted. Recitation of ranges of values herein are merely intended to serve as a shorthand method of referring individually to each separate value falling within the range, unless otherwise indicated herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A system of network asset identification of a network (100) having a plurality of end-user devices (102) connected thereto, comprising:
a plurality of patch panels (110), each having a plurality of patch panel ports (116);
a plurality of remote outlets (118), each being operatively associated with a patch panel port (116), each remote outlet (118) being configured for interconnection to an end-user device (102) ;
a sensing circuitry (128) configured for electronically determining the status of network connectivity of each end-user device (102); and a computing device (112) configured to perform event driven polling; **characterized in that** the sensing circuitry (128) is configured to determine electronically whether a new end-user device (102') has been connected to any of the remote outlets (118) of the patch panel port (116), and
the computing device (112) is configured to perform the event driven polling by communicating through some but not all of the remote outlets (118) to determine data associated with the new end-user device (102') in response to said electronic determination that the new end-user device (102') being connected to one (118') of the remote outlets (118).

2. The system of Claim 1, wherein the sensing circuitry (128) includes a scanner (128) communicating with each of the patch panels (110) to monitor an addition of a new end-user device (102') connected to one of the remote outlets (118').

3. The system of Claim 2, wherein the scanner (128) and each of the patch panels (110) include a portion of the sensing circuitry (128).

4. The system of anyone of Claims 1 to 3, wherein the computing system includes a switch (106) and each remote outlet (118) is operatively associated with the switch (106) through a patch panel port (110, 116), the switch (106) being configured to perform event driven polling only through a patch panel port (110b') operatively associated with the remote outlet (118') to which the new end-user device (102') is connected.

5. The system of claim 4, wherein the switch (106) performs event driven polling only through patch panel ports (116) of the patch panel (110b') which is operatively associated with the remote outlet (118') of the new end-user device (102').

6. The system of anyone of Claims 1 to 5, wherein the computing system includes a plurality of switches (106) and each remote (118) outlet is operatively associated with one of the switches (106) through a patch panel port (116), the computing device being configured to perform event driven polling only through patch panel ports (116) operatively associated with the switch (106') to which the new end-user device (102') is connected.

7. The system of anyone of Claims 1 to 6, further including a switch (106), a plurality of cross-connected panels (110a), each cross-connect panel (110a) having a plurality of cross-connect ports, each remote outlet (118) being operatively associated with the switch (106) through a patch panel port and a cross-connect port.

8. The system of anyone of Claims 1 to 7, further including a plurality of cables (124), each cable (124) extending from one of the patch panel ports to one of the remote outlets (118) in order to facilitate connection of the end-user devices (102) to the network (100).

9. The system of anyone of Claims 1 to 8, wherein the computing device stores data incorporating the physical locations of each port (116) and remote outlet (118) as well as an electronic map of each port (116) and remote outlet (118).

10. The system of anyone of Claims 1 to 9, further including monitoring circuitry embedded within the patch panel (110) and operatively associated with each port (116) to monitor a change in electrical signature of a network channel.

11. A method of identifying a new end-user device (102) connected within a network (100) which is configured according to the system of anyone of claims 1-10, the method comprising:
monitoring a plurality of remote outlets (118);
detecting a new end-user device (102') upon connection thereof to the network (100) at a first remote outlet (118');
determining data/information associated with the new end-user device (102') by electronically communicating through some but not all of the remote outlets (118) in response to said electronic determination that the new end-user device (102') being connected to one (118') of the remote outlets (118).

12. The method of Claim 11, wherein each remote outlet (118) is operatively associated with one of a plurality of patch panels ports (110, 116) within the network (100) and the determining step includes electronically communicating through only a patch panel port (110b', 116) interconnected to the first remote outlet (118') to which the new end-user device (102') is connected.

13. The method of Claim 11, wherein each remote outlet (118) is operatively associated with one of a plurality of patch panels ports (110, 116) within the network (100) and the determining step includes electronically communicating though some but not all of the patch panel ports (110, 116).

14. The method of Claim 11, wherein the first remote (118') outlet is interconnected to a first patch panel (110b') having patch panel ports (116) and the determining step includes electronically communicating through only patch panel ports (116) of the first patch panel (110b').

15. The method of Claim 11, wherein the first remote outlet (118') is operatively associated with a switch (106'), and the determining step includes electronically communicating through only remote outlets operatively associated with the switch (106').

16. The method of Claim 11, wherein the determining step includes directing a polling activity through some but not all of the network outlets (118).

17. The method of Claim 1, wherein the determining step includes determining a unique identifier of the new end-user device (102').

18. The method of Claim 17, wherein the determining step includes determining a MAC address of the new end-user device (102') .

19. The method of Claim 17, wherein the determining step includes determining a least one of the following with respect to the new end-user device (102'):
a. MAC address;
b. IP address;
c. computer name;
d. amount of toner available;
e. amount of drive space available; and
f. information regarding operating system used by the end-user device.

20. The method of Claim 11, wherein the determining step includes a computing device electronically communicating with a switch (106), and the switch (106') requesting the data operatively associated with the new end-user device (102').

21. The method of Claim 20, wherein the data associated with the new end-user device (102') is a unique identifier, and further including the step of matching the unique identifier with a network map to identify a specific physical location and identity of the new end-user device (102').

22. The method of Claim 21, further including the step of providing the specific physical location and identity of the new end-user device (102') to a network management system (114).

23. The method of Claim 11, wherein the monitoring step occurs electronically between a scanner (128) and a patch panel (110) to which the first remote outlet (118') is operatively associated.

24. The method of Claim 11, wherein the detecting step occurs electronically between a scanner (128) and a patch panel (110') to which the first remote outlet (118') is operatively associated.

25. The method of Claim 11, wherein the detecting step occurs electronically as change in electrical signature between a scanner (128) and a patch panel (110) to which the first remote outlet (118') is operatively associated.

26. The method of Claim 25, further including the step of electronically communicating to a computing device (112) the presence of the new end-user (102') device as well as a specific port associated with a switch (106') to which the new end-user device (102') is operatively connected.

27. The method of Claim 26, further including identifying physical locations of each port (116) and remote outlet (118) of the network (100) and storing the physical locations in the computing device (112), electronically mapping each port and remote outlet and matching each physical location to an electronic map created by the electronic mapping.

## Patentansprüche

1. System zur Identifikation von Netzwerkanlagen eines Netzwerks (100) mit einer Vielzahl von damit verbundenen Endnutzereinrichtungen (102), umfassend:
eine Vielzahl von Patchpaneln (110), von denen jedes eine Vielzahl von Patchpanel-Ports (116) aufweist;
eine Vielzahl von Remote-Steckdosen (118), von denen jede einem Patchpanel-Port (116) operativ zugeordnet ist, wobei jede Remote-Steckdose (118) zur Kopplung mit einer Endnutzereinrichtung (102) konfiguriert ist;
eine Erfassungsschaltanordnung (128), die konfiguriert ist, elektronisch den Zustand der Netzwerkverbindung jeder Endnutzereinrichtung (102) zu bestimmen;
und
eine Recheneinrichtung (112), die konfiguriert ist, ereignisgesteuertes Abfragen durchzuführen;
**dadurch gekennzeichnet, dass**
die Erfassungsschaltanordnung (128) konfiguriert ist, elektronisch zu bestimmen, ob eine neue Endnutzereinrichtung (102') mit irgendeiner der Remote-Steckdosen (118) des Patchpanel-Ports (116) verbunden wurde, und
die Recheneinheit (112) konfiguriert ist, das ereignisgesteuertes Abfragen mittels Kommunikation über einige, aber nicht alle Remote-Steckdosen (118) durchzuführen, um Daten zu bestimmen, die der neuen Endnutzereinrichtung (102') als Antwort auf das elektronische Bestimmen zugeordnet sind, dass die neue Endnutzereinrichtung (102') mit einer (118') der Remote-Steckdosen (118) verbunden wurde.

2. System nach Anspruch 1, wobei die Erfassungsschaltanordnung (128) einen Scanner (128) aufweist, der der mit jedem der Patchpanel (110) kommuniziert, um ein Hinzufügen einer neuen Endnutzereinrichtung (102') zu überwachen, die mit einer der Remote-Steckdosen (118') verbunden ist

3. System nach Anspruch 2, wobei der Scanner (128) und jedes der Patchpanel (110) einen Teil der Erfassungsschaltanordnung (128) beinhalten.

4. System nach einem der Ansprüche 1 bis 3, wobei das Rechensystem einen Schalter (106) aufweist und jede Remote-Steckdose (118) dem Schalter (106) durch einen Patchpanel-Port (110, 116) operativ zugeordnet ist, wobei der Schalter (106) konfiguriert ist, ereignisgesteuertes Abfragen nur durch einen Patchpanel-Port (110b') durchzuführen, der operativ der Remote-Steckdose (118') zugeordnet ist, mit der die neue Endnutzereinrichtung (102') verbunden ist.

5. System nach Anspruch 4, wobei der Schalter (106) ereignisgesteuertes Abfragen nur durch Patchpanel-Ports (116) des Patchpanels (110b') durchführt, das operativ der Remote-Steckdose (118') der neuen Endnutzereinrichtung (102') zugeordnet ist.

6. System nach einem der Ansprüche 1 bis 5, wobei das Rechensystem eine Vielzahl von Schaltern (106) aufweist und jede Remote-Steckdose (118) operativ durch ein Patchpanel-Port (116) einem der Schalter (106) zugeordnet ist, wobei die Recheneinrichtung (112) konfiguriert ist, ereignisgesteuertes Abfragen nur durch Patchpanel-Ports (116) durchzuführen, die dem Schalter (106') operativ zugeordnet sind, mit dem die neue Endnutzereinrichtung (102') verbunden ist.

7. System nach einem der Ansprüche 1 bis 6, ferner aufweisend einen Schalter (106), eine Vielzahl von querverbundenen Panels (110a), wobei jedes querverbundene Panel (110a) eine Vielzahl von querverbundenen Ports aufweist, wobei jede Remote-Steckdose (118) dem Schalter (106) operativ durch ein Patchpanel-Port und einen querverbundenen Port zugeordnet ist.

8. System nach einem der Ansprüche 1 bis 7, ferner aufweisend eine Vielzahl von Kabeln (124), wobei sich jedes Kabel (124) von einem der Patchpanel-Ports zu einer der Remote-Steckdosen (118) erstreckt, um die Verbindung der Endnutzereinrichtungen (102) mit dem Netzwerk (100) zu erleichtern.

9. System nach einem der Ansprüche 1 bis 8, wobei die Recheneinrichtung (112) Daten speichert, die den Standort jedes Ports (116) und jeder Remote-Steckdose (118) sowie ein elektronisches Abbild jedes Ports (116) und jeder Remote-Steckdose (118) enthalten.

10. System nach einem der Ansprüche 1 bis 9, ferner aufweisend eine Überwachungsschaltanordnung, die im Patchpanel (110) eingebaut und operativ jedem Port (116) zugeordnet ist, um einen Wechsel einer elektrischen Signatur eines Netzwerkkanals zu überwachen.

11. Verfahren zum Identifizieren einer neuen Endnutzereinrichtung (102), die innerhalb eines Netzwerks (100) angeschlossen ist, das gemäß dem System nach einem der Ansprüche 1 bis 10 konfiguriert ist, wobei das Verfahren umfasst:
Überwachen einer Vielzahl von Remote-Steckdosen (118);
Erkennen einer neuen Endnutzereinrichtung (102') bei ihrer Verbindung mit dem Netzwerk (100) an einer ersten Remote-Steckdose (118');
Bestimmen von Daten/Informationen, die mittels elektronischem Kommunizieren durch einige, aber nicht alle Remote-Steckdosen (118) der neuen Endnutzereinrichtung (102') zugeordnet sind als Antwort auf das elektronische Bestimmen, dass die neue Endnutzereinrichtung (102') mit einer (118') der Remote-Steckdosen (118) verbunden wurde.

12. Verfahren nach Anspruch 11, wobei jede Remote-Steckdose (118) einem aus der Vielzahl von Patchpanel-Ports (110, 116) innerhalb des Netzwerks (100) operativ zugeordnet ist und der Schritt des Bestimmens das elektronische Kommunizieren durch nur einen Patchpanel-Port (110b', 116) beinhaltet, der mit der ersten Remote-Steckdose (118') gekoppelt ist, mit der die neue Endnutzereinrichtung (102') verbunden ist.

13. Verfahren nach Anspruch 11, wobei jede Remote-Steckdose (118) einem aus der Vielzahl von Patchpanel-Ports (110, 116) innerhalb des Netzwerks (100) operativ zugeordnet ist und der Schritt des Bestimmens das elektronische Kommunizieren durch einige, aber nicht alle Patchpanel-Ports (110, 116) beinhaltet.

14. Verfahren nach Anspruch 11, wobei die erste Remote-Steckdose (118') mit einem ersten Patchpanel (110b') verbunden ist, das Patchpanel-Ports (116) aufweist, und der Schritt des Bestimmens elektronisches Kommunizieren nur durch Patchpanel-Ports (116) des ersten Patchpanels (110b') beinhaltet.

15. Verfahren nach Anspruch 11, wobei die erste Remote-Steckdose (118') operativ einem Schalter (106') zugeordnet ist, und der Schritt des Bestimmens elektronisches Kommunizieren nur durch Remote-Steckdosen beinhaltet, die dem Schalter (106') operativ zugeordnet sind.

16. Verfahren nach Anspruch 11, wobei der Schritt des Bestimmens das Leiten einer Abfragetätigkeit durch einige, aber nicht alle der Netzwerksteckdosen (118) beinhaltet.

17. Verfahren nach Anspruch 11, wobei der Schritt des Bestimmens das Festlegen einer eindeutigen Kennung der neuen Endnutzereinrichtung (102') beinhaltet.

18. Verfahren nach Anspruch 17, wobei der Schritt des Bestimmens das Festlegen einer MAC-Adresse der neuen Endnutzereinrichtung (102') beinhaltet.

19. Verfahren nach Anspruch 17, wobei der Schritt des Bestimmens das Festlegen von zumindest eines des Folgenden bezüglich der neuen Endnutzereinrichtung (102') beinhaltet:
a. MAC Adresse;
b. IP Adresse;
c. Computername;
d. Menge des verfügbaren Toners;
e. Menge des verfügbaren Plattenplatzes; und
f. Informationen bezüglich des von der Endnutzereinrichtung verwendeten Betriebssystems.

20. Verfahren nach Anspruch 11, wobei der Schritt des Bestimmens das elektronische Kommunizieren einer Recheneinrichtung mit einem Schalter (106) beinhaltet, und der Schalter (106') die der neuen Endnutzereinrichtung (102') operativ zugeordneten Daten anfordert.

21. Verfahren nach Anspruch 20, wobei die der neuen Endnutzereinrichtung (102') zugeordneten Daten eine eindeutige Kennung sind, und das Verfahren ferner den Schritt des Abstimmens der eindeutigen Kennung mit einem Netzwerkabbild beinhaltet, um einen spezifischen Standort und eine Identität der neuen Endnutzereinrichtung (102') zu identifizieren.

22. Verfahren nach Anspruch 21, ferner beinhaltend den Schritt des Bereitstellen des spezifischen Standorts und der Identität der neuen Endnutzereinrichtung (102') für ein Netzwerkmanagementsystem (114) beinhaltet.

23. Verfahren nach Anspruch 11, wobei der Schritt des Überwachens elektronisch zwischen einem Scanner (128) und einem Patchpanel (110) erfolgt, dem die erste Remote-Steckdose (118') operativ zugeordnet ist.

24. Verfahren nach Anspruch 11, wobei der Schritt des Erkennens elektronisch zwischen einem Scanner (128) und einem Patchpanel (110') erfolgt, dem die erste Remote-Steckdose (118') operativ zugeordnet ist.

25. Verfahren nach Anspruch 11, wobei der Schritt des Erkennens elektronisch als Wechsel einer elektrischen Signatur zwischen einem Scanner (128) und einem Patchpanel (110) erfolgt, dem die erste Remote-Steckdose (118') operativ zugeordnet ist.

26. Verfahren nach Anspruch 25, ferner beinhaltend den Schritt elektronischen Kommunizierens der Gegenwart der neuen Endnutzereinrichtung (102') an eine Recheneinrichtung (112), sowie eines spezifischen Ports, der einem Schalter zugeordnet ist, mit dem die neue Endnutzereinrichtung (102') verbunden ist.

27. Verfahren nach Anspruch 26, ferner beinhaltend das Identifizieren des Standorts jeden Ports (116) und jeder Remote-Steckdose (118) des Netzwerks (100), und des Speicherns der Standorte in der Recheneinrichtung (112), das elektronische Abbilden jeden Ports und jeder Remote-Steckdose und das Abstimmen jeden Standorts mit einem elektronischen Abbild, das mittels des elektronischen Abbildens erzeugt wurde.

## Revendications

1. Système d'identification d'actif de réseau d'un réseau (100) ayant une pluralité de dispositifs d'utilisateur final (102) connectés à celui-ci, comprenant :
une pluralité de panneaux de raccordement (110), chacun ayant une pluralité de ports de panneau de raccordement (116) ;
une pluralité de prises distantes (118), chacune étant associée fonctionnellement à un port de panneau de raccordement (116), chaque prise distante (118) étant configurée pour l'interconnexion à un dispositif d'utilisateur final (102) ;
un ensemble de circuits de détection (128) configuré pour déterminer électroniquement le statut de connectivité de réseau de chaque dispositif d'utilisateur final (102) ; et
un dispositif informatique (112) configuré pour effectuer une interrogation déclenchée par un événement ;
**caractérisé en ce que** :
l'ensemble de circuits de détection (128) est configuré pour déterminer électroniquement si un nouveau dispositif d'utilisateur final (102') a été connecté à l'une quelconque des prises distantes (118) du port de panneau de raccordement (116), et
le dispositif informatique (112) est configuré pour effectuer l'interrogation déclenchée par un événement en communiquant par l'intermédiaire de certaines mais pas de la totalité des prises distantes (118) pour déterminer des données associées au nouveau dispositif d'utilisateur final (102') en réponse à ladite détermination électronique selon laquelle le nouveau dispositif d'utilisateur final (102') est connecté à l'une (118') des prises distantes (118).

2. Système selon la revendication 1, dans lequel l'ensemble de circuits de détection (128) inclut un scanneur (128) communiquant avec chacun des panneaux de raccordement (110) pour surveiller un ajout d'un nouveau dispositif d'utilisateur final (102') connecté à l'une des prises distantes (118').

3. Système selon la revendication 2, dans lequel le scanneur (128) et chacun des panneaux de raccordement (110) incluent une partie de l'ensemble de circuits de détection (128).

4. Système selon l'une quelconque des revendications 1 à 3, dans lequel le système informatique inclut un commutateur (106) et chaque prise distante (118) est associée fonctionnellement au commutateur (106) par l'intermédiaire d'un port de panneau de raccordement (110, 116), le commutateur (106) étant configuré pour effectuer une interrogation déclenchée par un événement uniquement par l'intermédiaire d'un port de panneau de raccordement (110b') associé fonctionnellement à la prise distante (118') à laquelle le nouveau dispositif d'utilisateur final (102') est connecté.

5. Système selon la revendication 4, dans lequel le commutateur (106) effectue une interrogation déclenchée par un événement uniquement par l'intermédiaire de ports de panneau de raccordement (116) du panneau de raccordement (110b') qui est associé fonctionnellement à la prise distante (118') du nouveau dispositif d'utilisateur final (102').

6. Système selon l'une quelconque des revendications 1 à 5, dans lequel le système informatique inclut une pluralité de commutateurs (106) et chaque prise distante (118) est associée fonctionnellement à l'un des commutateurs (106) par l'intermédiaire d'un port de panneau de raccordement (116), le dispositif informatique étant configuré pour effectuer une interrogation déclenchée par un événement uniquement par l'intermédiaire de ports de panneau de raccordement (116) associés fonctionnellement au commutateur (106') auquel le nouveau dispositif d'utilisateur final (102') est connecté.

7. Système selon l'une quelconque des revendications 1 à 6, incluant en outre un commutateur (106), une pluralité de panneaux interconnectés (110a), chaque panneau d'interconnexion (110a) ayant une pluralité de ports d'interconnexion, chaque prise distante (118) étant associée fonctionnellement au commutateur (106) par l'intermédiaire d'un port de panneau de raccordement et d'un port d'interconnexion.

8. Système selon l'une quelconque des revendications 1 à 7, incluant en outre une pluralité de câbles (124), chaque câble (124) s'étendant de l'un des ports de panneau de raccordement à l'une des prises distantes (118) afin de faciliter la connexion des dispositifs d'utilisateur final (102) au réseau (100).

9. Système selon l'une quelconque des revendications 1 à 8, dans lequel le dispositif informatique stocke des données incorporant les emplacements physiques de chaque port (116) et prise distante (118) ainsi qu'une carte électronique de chaque port (116) et prise distante (118).

10. Système selon l'une quelconque des revendications 1 à 9, incluant en outre un ensemble de circuits de surveillance intégré dans le panneau de raccordement (110) et associé fonctionnellement à chaque port (116) pour surveiller un changement de signature électrique d'un canal de réseau.

11. Procédé d'identification d'un nouveau dispositif d'utilisateur final (102) connecté au sein d'un réseau (100) qui est configuré selon le système de l'une quelconque des revendications 1 à 10, le procédé comprenant :
la surveillance d'une pluralité de prises distantes (118) ;
la détection d'un nouveau dispositif d'utilisateur final (102') lors de sa connexion au réseau (100) au niveau d'une première prise distante (118') ;
la détermination de données/informations associées au nouveau dispositif d'utilisateur final (102') en communiquant électroniquement par l'intermédiaire de certaines mais pas de la totalité des prises distantes (118) en réponse à ladite détermination électronique selon laquelle le nouveau dispositif d'utilisateur final (102') est connecté à l'une (118') des prises distantes (118).

12. Procédé selon la revendication 11, dans lequel chaque prise distante (118) est associée fonctionnellement à l'un d'une pluralité de ports de panneau de raccordement (110, 116) dans le réseau (100) et l'étape de détermination inclut la communication électronique uniquement par l'intermédiaire d'un port de panneau de raccordement (110b', 116) interconnecté à la première prise distante (118') à laquelle le nouveau dispositif d'utilisateur final (102') est connecté.

13. Procédé selon la revendication 11, dans lequel chaque prise distante (118) est associée fonctionnellement à l'un d'une pluralité de ports de panneau de raccordement (110, 116) dans le réseau (100) et l'étape de détermination inclut la communication électronique par l'intermédiaire de certains mais pas de la totalité des ports de panneau de raccordement (110, 116).

14. Procédé selon la revendication 11, dans lequel la première prise distante (118') est interconnectée à un premier panneau de raccordement (110b') ayant des ports de panneau de raccordement (116) et l'étape de détermination inclut la communication électronique par l'intermédiaire uniquement de ports de panneau de raccordement (116) du premier panneau de raccordement (110b').

15. Procédé selon la revendication 11, dans lequel la première prise distante (118') est associée fonctionnellement à un commutateur (106'), et l'étape de détermination inclut la communication électronique par l'intermédiaire uniquement de prises distantes associées fonctionnellement au commutateur (106').

16. Procédé selon la revendication 11, dans lequel l'étape de détermination inclut la direction d'une activité d'interrogation par l'intermédiaire de certaines mais pas de la totalité des prises de réseau (118).

17. Procédé selon la revendication 1, dans lequel l'étape de détermination inclut la détermination d'un identifiant unique du nouveau dispositif d'utilisateur final (102').

18. Procédé selon la revendication 17, dans lequel l'étape de détermination inclut la détermination d'une adresse MAC du nouveau dispositif d'utilisateur final (102').

19. Procédé selon la revendication 17, dans lequel l'étape de détermination inclut la détermination d'au moins l'un de ce qui suit relativement au nouveau dispositif d'utilisateur final (102') :
a. adresse MAC ;
b. adresse IP ;
c. nom d'ordinateur ;
d. quantité de toner disponible ;
e. quantité d'espace disque disponible ; et
f. informations concernant le système d'exploitation utilisé par le dispositif d'utilisateur final.

20. Procédé selon la revendication 11, dans lequel l'étape de détermination inclut un dispositif informatique communiquant électroniquement avec un commutateur (106), et le commutateur (106') demandant les données associées fonctionnellement au nouveau dispositif d'utilisateur final (102').

21. Procédé selon la revendication 20, dans lequel les données associées au nouveau dispositif d'utilisateur final (102') sont un identifiant unique, et incluant en outre l'étape consistant à mettre en correspondance l'identifiant unique avec une carte de réseau pour identifier un emplacement physique spécifique et une identité du nouveau dispositif d'utilisateur final (102').

22. Procédé selon la revendication 21, incluant en outre l'étape consistant à fournir l'emplacement physique spécifique et l'identité du nouveau dispositif d'utilisateur final (102') à un système de gestion de réseau (114).

23. Procédé selon la revendication 11, dans lequel l'étape de surveillance se produit électroniquement entre un scanneur (128) et un panneau de raccordement (110) auquel la première prise distante (118') est associée fonctionnellement.

24. Procédé selon la revendication 11, dans lequel l'étape de détection se produit électroniquement entre un scanneur (128) et un panneau de raccordement (110') auquel la première prise distante (118') est associée fonctionnellement.

25. Procédé selon la revendication 11, dans lequel l'étape de détection se produit électroniquement en tant que changement de signature électrique entre un scanneur (128) et un panneau de raccordement (110) auquel la première prise distante (118') est associée fonctionnellement.

26. Procédé selon la revendication 25, incluant en outre l'étape consistant à communiquer électroniquement à un dispositif informatique (112) la présence du nouveau dispositif d'utilisateur final (102') ainsi qu'un port spécifique associé à un commutateur (106') auquel le nouveau dispositif d'utilisateur final (102') est connecté fonctionnellement.

27. Procédé selon la revendication 26, incluant en outre l'identification d'emplacements physiques de chaque port (116) et prise distante (118) du réseau (100) et le stockage des emplacements physiques dans le dispositif informatique (112), la cartographie électronique de chaque port et prise distante et la mise en correspondance de chaque emplacement physique sur une carte électronique créée par la cartographie électronique.
